# EUROPÄISCHE PATENTSCHRIFT

(11) **EP 4 434 719 B1**
(45) Veröffentlichungstag und Bekanntmachung des Hinweises auf die Patenterteilung: **09.07.2025**
(21) Anmeldenummer: 24165248.6
(22) Anmeldetag: 21.03.2024
(51) Int. Cl.: B29C 51/00, B29C 51/08, B29C 51/30, B29L 31/00

(54) **VERFAHREN ZUR HERSTELLUNG EINES WANNENFÖRMIGEN, EINE SICHTSEITE UND EINE UNTERSEITE AUFWEISENDEN SANITÄRGEGENSTANDS AUS KUNSTSTOFF**
METHOD FOR PRODUCING A TUB-SHAPED SANITARY ARTICLE OF PLASTIC MATERIAL, HAVING A VISIBLE SIDE AND A LOWER SIDE
PROCÉDÉ DE FABRICATION D'UN OBJET SANITAIRE EN MATIÈRE PLASTIQUE EN FORME DE CUVETTE, PRÉSENTANT UNE FACE VISIBLE ET UNE FACE INFÉRIEURE

(30) Priorität: 24.03.2023 DE 102023107459
(43) Veröffentlichungstag der Anmeldung: 25.09.2024
(73) Patentinhaber: Duravit Aktiengesellschaft, 78132 Hornberg (DE)
(72) Erfinder: STAMMEL, Thomas, 78132 Hornberg (DE); ABDELMENEM, Mohamed, 1160 Kairo (EG)
(74) Vertreter: Lindner Blaumeier Patent- und Rechtsanwälte

(56) Entgegenhaltungen:
- EP-B1- 2 295 162
- CN-A- 111 805 878
- US-A- 4 750 967
- US-A1- 2011 000 013

## Beschreibung

Die Erfindung betrifft ein Verfahren zur Herstellung eines wannenförmigen, eine Sichtseite und eine Unterseite aufweisenden Sanitärgegenstands aus Kunststoff.

Gattungsgemäße Verfahren und Umformeinrichtungen sind in den Patentschriften EP2295162B1, US4750967A, CN111805878A und US2011/000013A1 beschrieben.

Derartige wannenförmige Sanitärgegenstände sind in der Regel Bade- oder Duschwanne und werden aus einer Kunststoffplatte, meist eine Acrylplatte, in einem Tiefziehverfahren, oft auch Thermoformen genannt, hergestellt. Bei diesem Verfahren wird die Kunststoffplatte auf 180°-200 °C vorgewärmt, sodass sie erweicht und einen verformbaren Zustand einnimmt. Die Kunststoffplatte wird in eine Form eingelegt, an den Seiten eingespannt und durch Anlegen eines Unterdrucks von der Formseite her gegen die Form gesaugt. Die Form bildet dabei die gesamte flächige Unterseite des wannenförmigen Umformteils ab, also mit sämtlichen Kanten, Vertiefungen und Flächen. Über die Formfläche ist eine Vielzahl von Saugkanälen verteilt vorgesehen, sodass die Kunststoffplatte an mehreren Stellen angesaugt wird. Nach dem Ansaugen und demzufolge dem Abbilden der Formfläche über die Kunststoffplatte wird die umgeformte Kunststoffplatte gekühlt und anschließend der Form entnommen. Anschließend wird der Umformgegenstand an seiner Unterseite mit einer Verstärkungsschicht versehen, zumeist einer GFK-Schicht, um die Stabilität zu erhöhen. Sofern erforderlich, werden zusätzlich zur GFK-Verstärkung Verstärkungselemente wie Verstärkungsplatten aus Flachs, Holz oder Fasern vorgesehen und z.B. in die Verstärkungsschicht eingebettet.

Beim Tiefziehen wird die Kunststoffplatte inhomogen gestreckt, was zu einer inhomogenen Dicke des Umformgegenstands führt. Aus diesem Grund ist stets eine entsprechend dicke Kunststoffplatte zu verwenden, wobei die Dicke letztlich abhängig vom Umformgrad ist. Die Dicke muss so gewählt werden, dass in den Bereichen, in denen das Material am stärksten gedehnt wird, die resultierende Dicke nach dem Tiefziehen noch ausreichend ist. Da das Material gegen die Formfläche gesaugt wird und an dieser anliegt, kann es zwangsläufig nicht frei fließen, da durch die Anlage und das Ansaugen eine entsprechende Reibung bzw. Haftung gegeben ist, was eine der Ursachen für die inhomogenen Umformung ist. Wenn das Material zu stark gedehnt wird, verschlechtert sich das Aussehen des Produkts. In Bereichen mit hoher Dehnung tritt typischerweise ein Orangenhauteffekt auf. Jede Unvollkommenheit, die in der Form auftritt, wird in die Kunststoffplatte eingeprägt. Weitere Einschränkungen ergeben sich dadurch, dass sich das Material an die Innenradien, also die im Bereich von Biegungen gegebenen Geometrie der Tiefziehform, anpassen muss. Dies bedeutet, dass die Innenradien in der Regel im Bereich von 40 mm liegen, schärfere Radien sind nicht möglich. In jedem Fall ist die Innenseite des Formteils, also die Sichtseite des späteren Sanitärgegenstands, manuell nach zu bearbeiten, also zu schleifen und zu polieren, um etwaige Fehler oder in Homogenität zu beseitigen. Nachteilig am Tiefziehverfahren ist ferner, dass mit einer Form nur ein einziger Gegenstandstyp hergestellt werden kann, also beispielsweise eine Duschwanne oder Badewanne mit einer definierten, unveränderlichen Geometrie wie beispielsweise einer definierten Tiefe. Soll eine solche Wanne, die etwas tiefer ist, hergestellt werden, so ist eine neue Form zu bauen und zu verwenden. Bereits für Wannen, die sich lediglich in der Position des Ablaufs unterscheiden, ist eine separate Form nötig.

Der Erfindung liegt daher das Problem zugrunde, ein verbessertes Verfahren zur Herstellung eines solchen Sanitärgegenstands anzugeben.

Zur Lösung dieses Problems ist erfindungsgemäß ein Verfahren zur Herstellung eines wannenförmigen, eine Sichtseite und eine Unterseite aufweisenden Sanitärgegenstands aus Kunststoff vorgesehen, mit folgenden Schritten:
- Bereitstellen einer zur Bildung des Sanitärgegenstands umzuformenden Kunststoffplatte,
- Bereitstellen einer Umformeinrichtung umfassend eine Rahmenanordnung mit einem ersten Rahmen mit einer ersten rahmenförmigen Biegestruktur und einem zweiten Rahmen mit einer zweiten rahmenförmigen Biegestruktur, wobei die Kunststoffplatte über die Biegestrukturen umzuformen ist,
- Anordnen und Befestigen der erwärmten Kunststoffplatte am ersten Rahmen,
- Einfahren des zweiten Rahmens in den offenen ersten Rahmen in eine Umformposition, derart, dass der zweite Rahmen beim Einfahren mit seiner Biegestruktur die Kunststoffplatte mitnimmt, wobei die Kunststoffplatte sowohl über die erste als auch die zweite Biegestruktur wannenförmig umgeformt wird,
- Abkühlen der Kunststoffplatte.

Bei dem erfindungsgemäßen Verfahren kommt keine flächige Form mehr zum Einsatz, wie dies beim Tiefziehen der Fall ist, sondern lediglich zwei ineinander fahrbare Rahmen, an denen jeweils rahmenförmige Biegestrukturen vorgesehen sind, über die die geometrische Umformung erfolgt. Dem liegt zugrunde, dass sich ein wannenförmiger Sanitärgegenstands letztlich lediglich durch einige wenige Biegebereiche im Bereich seines oberen Randes und im Bereich des Wannenbodens auszeichnet, wobei diese Biegebereiche näherungsweise linienförmig sind respektive sehr schmale lineare Abschnitte sind. Diese randseitigen und bodenseitig Biegebereiche sind über gerade Flächenabschnitte miteinander verbunden.

Bei dem erfindungsgemäßen Verfahren wird die erwärmte Kunststoffplatte auf den ersten Rahmen gespannt und daran fixiert. Der erste Rahmen weist eine erste Biegestruktur auf. Er ist offen, sodass der zweite Rahmen von oben in ihn einfahren kann. Der zweite Rahmen weist eine zweite Biegestruktur auf, wobei diese zweite Biegestruktur, wenn der zweite Rahmen in den ersten Rahmen eingefahren wird, gegen die Kunststoffplatte läuft und diese, weil durch die Erwärmung erweicht, mitnimmt und in den ersten Rahmen senkt. Hierbei wird die Kunststoffplatte über die erste Biegestruktur des ersten Rahmens umgeformt, d. h., dass im oberen Randbereich eine entsprechende umlaufende Randbiegung, über die der Randbereich vom Wannenbereich abgegrenzt ist, erzeugt wird. Die zweite rahmenförmigen Biegestruktur definiert den und bildet den Übergang der Wannenwände zum Wannenboden aus, d. h., dass über sie die umlaufende bodenseitige Biegung definiert und ausgebildet wird. Während dieses Einfahrens in die Umformendposition hat folglich die Kunststoffplatte lediglich Kontakt mit der ersten Biegestruktur und der zweiten Biegestruktur, wobei der jeweilige Kontakt dort nur näherungsweise linienförmig ist, da diese Biegestrukturen lediglich die schmalen, linearen Biegeabschnitte, in denen ein Übergang von einer benachbarten Fläche in eine andere benachbarte Fläche erfolgt, definieren. Irgendein sonstiger Flächenkontakt ist bei dieser Umformung zur Wannenform nicht gegeben. D. h., dass bei diesem Umformen nur ein geringstmöglicher Kontakt zwischen den beiden Rahmen beziehungsweise den Biegestrukturen und der Kunststofffläche gegeben ist, da die Umformeinrichtung letztlich nur auf die charakteristischen Linien, also die beiden Biegestrukturen, die für das Umformen und das Ausbilden der Biegungen essenziell sind, reduziert ist.

Diese rahmenartigen ersten und zweiten Biegestrukturen können, wie zumeist üblich, eine Rechteckform oder eine Quadratform aufweisen, nachdem Bade- oder Duschwannen zumeist rechteckiger oder quadratischer Geometrie sind, sowohl randseitig als auch bodenseitig. Denkbar ist es aber auch, dass die Biegestrukturen rund oder oval sind, die Form eines Vielecks haben, oder, beispielsweise bei Eckwannen, zwei gerade Schenkel und einen gebogenen Schenkel aufweisen. D. h., dass unterschiedliche Biegestrukturgeometrien denkbar sind, nachdem sich auch solche Wannenformen auf wenige charakteristische Linien, die über die Biegestrukturen abgebildet werden, reduzieren lassen.

Da es erfindungsgemäß nur zu einem sehr kleinen, quasi linienförmigen Kontakt zwischen den Biegestrukturen und der Kunststoffplatte kommt, über den nur die Biegungen ausgebildet werden, kann folglich das weiche Kunststoffmaterial in allen Zwischenbereichen, also allen Flächenbereichen (also den Seitenwänden und dem Boden) völlig homogen gedehnt werden, da das Material in diesen Bereichen frei fließen kann und sich demzufolge homogen in seiner Dicke ändern kann. Denn in diesen Bereichen ist kein Flächenkontakt des Kunststoffmaterials zu irgendeinem Flächenbereich der Form gegeben, da, wie beschrieben, die Kontaktfläche ausschließlich auf die Biegestrukturen reduziert ist. Die finale Dicke des umgeformten Gegenstands ist demzufolge in den jeweiligen Flächenbereichen äußerst gleichmäßig, wie auch in den Biegebereichen. Auch ist die Oberflächengüte der Innenseite, also der Sichtseite, hervorragend und bedarf keiner Nachbearbeitung, da die Flächenbereiche wie beschrieben quasi frei im Raum gedehnt werden und demzufolge keinerlei zu Inhomogenitäten führender Reibung oder ähnlichem unterworfen sind.

Da bei dem erfindungsgemäßen Verfahren der zweite Rahmen in den ersten Rahmen eingefahren wird und demzufolge über die Einfahrtiefe auch die Tiefe des Sanitärgegenstands bestimmt wird, ist durch die Verwendung der erfindungsgemäßen Umformeinrichtung auch ohne weiteres eine entsprechende Variation des Umformgegenstands möglich. Denn, beispielsweise bei gleichbleibender Grundgeometrie (z. B. Rechteckform), es kann durch etwas weiteres Einfahren des zweiten Rahmens in den ersten Rahmen problemlos die Tiefe beispielsweise der Duschwanne verändert werden, beispielsweise von 3 cm auf 5 cm oder 7 cm und ähnliches. D. h., dass das erfindungsgemäße Verfahren auch wesentlich flexibler hinsichtlich der Nutzung der Umformeinrichtung ist, sodass zur Herstellung eines Sanitärgegenstands mit etwas anderer Geometrie, insbesondere Tiefe, ein und dieselbe Umformeinrichtung verwendet werden kann.

Sofern eine hinreichend dicke Kunststoffplatte verwendet wird, die auch nach dem Umformen ausreichend stabil ist, ist keine zusätzliche Verstärkungsschicht auf die Rückseite des umgeformten Bauteils aufzubringen. Sofern es jedoch aus Stabilitäts- und Steifigkeitsgründen erforderlich ist, kann erfindungsgemäß nach dem Abkühlen des Umformgegenstands auf dessen Unter- oder Rückseite eine Verstärkungsschicht aufgebracht, insbesondere aufgespritzt werden. Hierbei kann es sich bevorzugt um eine faserverstärkte Kunststoffschicht, z.B. eine mit Glasfasern verstärkte Schicht (GFK-Schicht) oder mit Carbonfasern verstärkte Schicht (CFK-Schicht) handeln. In diese Verstärkungsschicht kann an einer oder mehreren ausgezeichneten Stellen bei Bedarf zusätzlich ein Verstärkungselement eingebettet werden, z.B. unterhalb des Bodens oder entlang eines Randes. Ein solches Verstärkungselement kann plattenförmig sein, aber auch leistenförmig oder als gewinkeltes leistenförmiges Profil ausgeführt sein. Es kann aus Holz oder einem Fasermaterial sein, denkbar sind aber auch Kunststoff-Verstärkungsteile.

In Weiterbildung des erfindungsgemäßen Verfahrens ist vorgesehen, dass eine Rahmenanordnung mit einem ersten Rahmen verwendet wird, dessen erste Biegestruktur einen äußeren ersten Strukturabschnitt und einen parallel dazu verlaufenden, innerhalb des ersten Strukturabschnitts liegenden zweiten Strukturabschnitt aufweist, wobei die erwärmte Kunststoffplatte derart am ersten Rahmen angeordnet wird, dass sie mit ihrem Seitenrand unter Ausbildung eines Randabschnitts des Sanitärgegenstands um den weiter außen liegenden ersten Strukturabschnitt gebogen ist. Über die quasi zweiteilige Geometrie der ersten Biegestruktur ist es möglich, einen zweifach gebogenen Randbereich auszuformen, wie bei Badewannen und Duschwannen üblich. Über den äußeren ersten Strukturabschnitt wird eine Randabkantung ausgebildet, die regelmäßig vertikal nach unten läuft und eine Höhe von ca. 1-10 cm aufweist. An diese schließt sich ein zumeist horizontaler Randabschnitt an, der sodann über eine von dem inneren zweiten Strukturabschnitt ausgebildete Biegung in die benachbarte Wannenfläche übergeht. D. h., dass durch diese beiden Strukturabschnitte eine doppelt gebogene Randstruktur ausgebildet werden kann.

Dabei kann die Kunststoffplatte auf den beiden in einer gemeinsamen Ebene verlaufenden Strukturabschnitten aufliegend angeordnet werden. Beide rahmenförmigen Strukturabschnitte liegen mit ihren Auflagekanten, auf denen die Kunststoffplatte aufliegt, in einer gemeinsamen Ebene. D. h., dass die Kunststoffplatte auf beiden lagert und nicht nur auf einem und erst beim Umformen gegen den anderen geführt wird. Dies führt dazu, dass sich zwangsläufig ein horizontal verlaufender oberer Rand ausbildet, der außenseitig abgekantet ist, und der innenseitig in die Wannenfläche übergeht.

Alternativ dazu ist es auch denkbar, dass die Kunststoffplatte nur auf dem weiter außen liegenden ersten Strukturabschnitt aufliegend angeordnet ist und erst beim Einfahren des zweiten Rahmens gegen den tiefer liegenden zweiten Strukturabschnitt bewegt und über diesen umgeformt wird. Hier lagert also die erwärmte Kunststoffplatte nach ihrer Anordnung am ersten Rahmen nur auf dem äußeren ersten rahmenartigen Strukturabschnitt. Erst mit Beginn des Einfahrens des zweiten Rahmens, wenn also die zweite Biegestruktur gegen die Kunststoffplatte fährt und diese in den ersten Rahmen mitnimmt, legt sich die Kunststoffplatte an den innen liegenden ersten Strukturabschnitt an und wird anschließend um diesen gebogen. Dies führt dazu, dass der sich ausbildende obere Rand, abhängig vom Höhenunterschied der beiden Strukturschnitte, geringfügig schräg zum Wanneninneren läuft. Dies hat insbesondere bei Duschwannen den Vorteil, dass sich darauf kein Wasser ansammeln kann, sondern dass das Wasser vom Rand in den Wannenbereich abläuft.

Wie beschrieben, wird zum Umformen der zweite Rahmen mit seiner rahmenförmigen zweiten Biegestruktur in den ersten Rahmen ein. Über die Einfahrtiefe wird zwangsläufig die Tiefe des Wannenbereich definiert. Dabei ist es zweckmäßig, wenn der zweite Rahmen bis zum Erreichen eines Anschlags, gegen den der zweite Rahmen läuft oder gegen den die Kunststoffplatte beim Umformen bewegt wird, in den ersten Rahmen eingefahren wird. Über diesen Anschlag wird demzufolge die Einfahrtiefe begrenzt, sodass sichergestellt wird, dass der zweite Rahmen bei jedem Herstellungsvorgang stets um die gleiche Tiefe einfährt und demzufolge die gebildeten Umformgegenstände identisch sind.

Vorteilhaft ist es in diesem Zusammenhang, wenn eine Rahmenanordnung verwendet wird, bei der der Anschlag höhenverstellbar ist. Hierüber sind auf einfache Weise verschiedene Tiefen z.B. einer Duschwanne herstellbar, wobei die Duschwanne selbst jedoch stets die gleiche Grundform aufweist. Durch einfache Veränderung der Höhe des Anschlags kann demzufolge die Wannentiefe eingestellt werden, sodass mit derselben Umformeinrichtung unterschiedliche Wannentypen für unterschiedliche Märkte o. ä. hergestellt werden können. Denkbar ist es in diesem Zusammenhang sogar, dass, wenn die Rahmenanordnung eine rechteckige Form ist, sogar mit derselben Rahmenanordnung Duschwannen und Badewannen hergestellt werden können, die die gleiche rechteckige Grundform aufweisen. Denn es ist grundsätzlich denkbar, durch unterschiedliche Einfahrtiefen eine niedrigere Duschwanne sowie eine tiefere Badewanne herzustellen. Ist die erste Biegestruktur mit ihren beiden Strukturabschnitten nicht austauschbar an einem Rahmengestell angeordnet, so weisen die unterschiedlichen Wannen die gleiche Randgeometrie auf. Kann die erste Biegestruktur jedoch ausgetauscht werden, so ist es durch diesen einfachen Austausch auch möglich, trotz Verwendung letztlich dergleichen Rahmenanordnung unterschiedliche Wannentypen mit unterschiedlichen Randgeometrien herzustellen.

Ein wannenartige Sanitärgegenstands weist üblicherweise einen Ablauf auf, der den Anschluss einer Rohrleitung erlaubt. Der Ablauf ist über eine entsprechende Ablaufgeometrie, die in das Kunststoffmaterial eingeformt ist, definiert respektive gebildet. Um eine solche Ablaufgeometrie auszubilden, kann erfindungsgemäß ferner vorgesehen sein, dass beim Einfahren des zweiten Rahmens oder nach Erreichen der Umformendposition ein am zweiten Rahmen vorgesehenes patritzenartiges Formelement die Kunststoffplatte unter Ausbildung einer Ablaufgeometrie lokal umformt. Der zweite Rahmen ist folglich mit einem entsprechenden Formelement versehen, dass die Kunststoffplatte lokal umformt, sodass sich eine spezifische lokale Ablaufgeometrie ausbildet. Diese ist nachfolgend lediglich noch zu öffnen, indem sie ausgeschnitten wird.

Zweckmäßig ist es, wenn das patritzenartige Formelement mit einem am ersten Rahmen vorgesehenen matritzenartigen Formelement in der Umformendposition in Wirkverbindung gebracht wird. Das patritzenartige Formelement wirkt also mit einem matritzenartigen Formelement zusammen, wobei zwischen beiden Formelementen der Abschnitt der Kunststoffplatte aufgenommen ist und entsprechend der Geometrie der Formelemente geformt wird. Beide Formelemente sind die einzigen Teile, die entsprechende Abbildungsflächen definieren, da die Ablaufgeometrie üblicherweise eine ringförmige, leicht komische Struktur aufweist.

Das matritzenartige Formelement ist, was seine Höhenposition angeht, während des Umformvorgangs positionsfest, es kann aber zur Anpassung der Höhe gegebenenfalls vertikal verstellt werden. Beim Umformen wird bevorzugt das patritzenartige Formelement erst nach Erreichen der Umformendposition der Biegestruktur vertikal beweg, was beispielsweise über einen hydraulischen oder pneumatischen Stellzylinder oder auch einen Elektromotor erfolgen kann, sodass das patritzenartige Formelement unter Mitnahme des Plattenabschnitts gegen das matritzenartige Formelement unter Ausbildung der Ablaufgeometrie bewegt wird.

Besonders vorteilhaft ist es, wenn eine Rahmenanordnung verwendet wird, bei der, wenn nur das patritzenartige Formelement vorgesehen ist, dieses patritzenartige Formelement in seiner Position veränderbar am ersten Rahmen angeordnet ist, oder bei der sowohl das patritzenartige Formelement als auch das matritzenartige Formelement in ihrer Position veränderbar am ersten und am zweiten Rahmen angeordnet sind. Diese Erfindungsausgestaltung lässt folglich eine Positionsveränderung des oder der Formelemente zu, was gleichbedeutend damit ist, dass die Position der Ablaufgeometrie am Sanitärgegenstands verändert werden kann. Durch entsprechende Veränderung der Position ist es möglich, die Ablaufgeometrie beispielsweise bei einer rechteckigen Badewanne in der Mitte oder an einem Längsende der Badewanne auszubilden, oder bei einer Duschwanne in einer gewünschten Wannenecke und Ähnliches. Es ist lediglich erforderlich, dass eine oder beide Formelemente in ihrer Längs- und Querposition am jeweiligen Rahmen entsprechend zu positionieren.

Neben dem Verfahren selbst betrifft die Erfindung ferner eine Umformeinrichtung zur Herstellung eines wannenförmigen, eine Sichtseite und eine Unterseite aufweisenden Sanitärgegenstands aus Kunststoff, umfassend eine Rahmenanordnung mit einem ersten Rahmen mit einer ersten rahmenförmigen Biegestruktur und einem zweiten Rahmen mit einer zweiten rahmenförmigen Biegestruktur, wobei der zweite Rahmen in den ersten Rahmen unter Mitnahme einer am ersten Rahmen fixierten Kunststoffplatte einfahrbar und die Kunststoffplatte über die Biegestrukturen beider Rahmen unter Ausbildung von Biegungen umformbar ist.

Die Umformeinrichtung ist demzufolge ein reines Rahmenkonstrukt, das lediglich die beiden Rahmen mit ihren beiden rahmenförmigen Biegestrukturen aufweist. Irgendwelche Formflächen und Ähnliches sind bei der erfindungsgemäßen Umformeinrichtung nicht vorgesehen.

Dabei kann der erste Rahmen ein erstes Rahmengestell, an dem die erste Biegestruktur angeordnet ist, und der zweite Rahmen ein zweites Rahmengestell, an dem die zweite Biegestruktur angeordnet ist, aufweisen. Beide Rahmen weisen also entsprechende Gestelle auf, die als Träger der jeweiligen Biegestrukturen dienen. Dabei können die Biegestrukturen fest oder, bevorzugt, auch lösbar und damit austauschbar an den Rahmengestellen angeordnet sein. Die Austauschbarkeit ermöglicht eine gewisse Flexibilität und Anpassbarkeit der Biegestruktur des Rahmens, sodass durch einfachen Austausch beispielsweise der ersten Biegestruktur verschiedene Randgeometrien hergestellt werden können.

Dabei kann die erste Biegestruktur mittels rahmenartig verbundener, im Querschnitt rechteckiger Flachstreben und die zweite Biegestruktur mittels rahmenartig verbundener, runder oder ovaler Streben gebildet sein. Die erste Biegestruktur dient wie beschrieben der Ausbildung des Wannenrands, wobei in diesem Bereich zumeist etwas schärfere Biegungen, also Biegungen mit kleinerem Radius, vorgesehen sind. Diese werden zweckmäßigerweise mittels geeigneter Flachstreben, also dünnerer und leistenartiger Metallstreben gebildet, die kantenseitig entsprechend gerundet ausgebildet sind, sodass hierüber die entsprechende Rundung der Biegung, also der Radius gebildet wird.

Demgegenüber ist die zweite Biegestruktur, die die Biegung an der Sichtseite des Sanitärgegenstands im Übergang der Wannenflächen zum Boden definiert, aus im Querschnitt runden oder ovalen Streben gebildet, da dort zumeist ein etwas größerer Radius als im Randbereich gegeben ist. Diese runden oder ovalen Streben sind zweckmäßigerweise als Rohre oder Stangen ausgeführt.

Dabei lässt das erfindungsgemäße Verfahren bzw. die erfindungsgemäße Umformeinrichtung grundsätzlich die Ausbildung deutlich schärfere Biegungen, also von Biegungen mit deutlich kleinerem Radius als beim Tiefziehen möglich, zu. Mit der zweiten Biegestruktur können problemlos Innenradien von minimal bis zur 8 mm ausgebildet werden, wobei der gebildete Innenradius vom Durchmesser bzw. der Geometrie der Streben der zweiten Biegestruktur abhängig ist.

Die Streben der jeweiligen Biegestrukturen bilden jeweils einen geschlossenen Rahmen. Sie sind bevorzugt aus Metall und entsprechend fest miteinander verbunden, beispielsweise verschweißt, wobei aber auch zur Beibehaltung der Modularität Steckverbindungen, Schraubverbindungen oder dergleichen denkbar sind.

Um einen doppelt gebogenen Rand am Sanitärgegenstands auszubilden, weist die erste Biegestruktur bevorzugt einen äußeren ersten rahmenartigen Strukturabschnitt und einen parallel dazu verlaufenden, innerhalb des ersten Strukturabschnitts liegenden zweiten rahmenartigen Strukturabschnitt auf. Es sind also zwei ineinander liegende Flachstrebenrahmen vorgesehen, deren Streben letztlich parallel zueinander verlaufen. Um den äußeren Strukturabschnitt wird der Rand der Kunststoffplatte nach unten abgebogen, um den innen liegenden Strukturabschnitt wird die zentrale Plattenfläche nach innen zur Ausbildung des Wannenbereichs gebogen.

Die beiden Strukturabschnitte können in einer gemeinsamen Ebene verlaufen, was es ermöglicht, einen ebenen, horizontalen Rand am Sanitärgegenstands auszubilden, da die Kunststoffplatte auf beiden Strukturabschnitten beim Umformen aufliegt. Alternativ kann auch der weiter außen liegende erste Strukturabschnitt höher sein als der tiefer liegende zweite Strukturabschnitt. Beim Einfahren des zweiten Rahmens wird die Kunststoffplatte gegen den tieferen zweiten Strukturabschnitt hinbewegt, sodass der erzeugte Rand sich geringfügig zum Wanneninneren neigt.

Weiterhin ist zweckmäßigerweise eine Fixiereinrichtung zum Befestigen der Kunststoffplatte am ersten Rahmen vorgesehen. Über diese Fixiereinrichtung wird die Kunststoffplatte, nachdem sie auf den ersten Rahmen respektive die Befestigungsstruktur aufgelegt ist, entsprechend fixiert und eingespannt, damit sie sich beim Einfahren des zweiten Rahmens nicht bewegen kann. Dabei ist die Fixiereinrichtung bevorzugt zum Klemmen eines um die erste Biegestruktur, insbesondere den außen liegenden ersten Strukturabschnitte gebogenen Randabschnitts der Kunststoffplatte ausgebildet. Die Kunststoffplatte wird folglich durch einfaches Verklemmen fixiert.

Zweckmäßig ist es hierbei, wenn die Fixiereinrichtung seitlich an die erste Biegestruktur oder den ersten Strukturabschnitt anlegbare, den Randabschnitt dagegen klemmende Klemmleisten umfasst. Der Randabschnitt wird während dieses Klemmvorgangs bereits umgebogen, sodass hierüber auf einfache und zweckmäßige Weise der bereits vorstehend beschriebene, abgewinkelte Rand ausgebildet wird. Die Klemmleisten erstrecken sich zweckmäßigerweise über die gesamte Länge und Breite der Biegestruktur, sodass der Rand ebenfalls über die gesamte Länge und Breite der Kunststoffplatte umgebogen werden kann. Die Klemmleisten können entweder manuell angedrückt werden und über eine geeignete Mechanik verspannt werden. Denkbar ist es aber auch, sie hydraulisch oder pneumatisch gesteuert anzudrücken.

In Weiterbildung der Erfindung kann ferner am ersten Rahmen ein Anschlag vorgesehen sein, gegen den der zweite Rahmen oder gegen den die Kunststoffplatte beim Umformen bewegbar ist. Über diesen Anschlag wird die Einfahrtiefe respektive die Eintauchtiefe des zweiten Rahmens in den ersten Rahmen definiert, mithin also die Wannentiefe.

Dabei ist der Anschlag bevorzugt höhenverstellbar, sodass auf einfache Weise durch Variieren der Anschlaghöhe unterschiedliche Tiefen des Formgegenstands herstellbar sind. Durch Veränderung der Anschlaghöhe können folglich flachere oder tiefere Wannen gebildet werden.

Für eine einfache Höhenverstellbarkeit weist das erste Rahmengestell bevorzugt einen an Vertikalträgern höhenverstellbar angeordneten Gestellabschnitt auf, an dem der Anschlag angeordnet ist. Der Rahmen umfasst also ein entsprechendes Gestell mit einem vertikal verstellbaren Gestellabschnitt, der also in unterschiedliche Höhenpositionen gebracht werden kann. An diesem Gestellabschnitt ist der Anschlag angeordnet und kann so auf einfache Weise wie gewünscht positioniert werden.

Der Gestellabschnitt ist bevorzugt rahmenartig, weist also ebenfalls vier Streben bei einer Rechteckform des Rahmengestell auf. An ihm sind zwei versetzt positionierte Anschlagelemente vorgesehen, sodass also an zwei Positionen ein entsprechendes Anlaufen gegeben ist. Dies ist insbesondere bei der Ausbildung einer entsprechend langen Badewanne zweckmäßig.

Zur Ausbildung einer Ablaufgeometrie, die am finalen Sanitärgegenstands zur Ermöglichung eines Wasserablaufs und zur Anordnung einer Ablaufleitung erforderlich ist, ist zweckmäßigerweise am zweiten Rahmen ein patritzenartiges Formelement zum Umformen der Kunststoffplatte unter Ausbildung einer Ablaufgeometrie vorgesehen. Über dieses patritzenartige Formelement, das derart ausgestaltet ist, dass es in der Kunststoffplatte eine Trichterform als Ablaufgeometrie ausbilden kann, wird die Kunststoffplatte entsprechend umgeformt, wobei das Formelement bevorzugt erst gegen die Kunststoffplatte bewegt wird, wenn der zweite Rahmen in der Umformendposition ist.

Vorteilhaft ist es hierbei, wenn am ersten Rahmen ein matritzenartiges Formelement vorgesehen ist, das in der Umformendposition in Wirkverbindung mit dem patritzenartigen Formelement bringbar ist. Die beiden Formelemente wirken also unmittelbar miteinander zusammen, wobei das matritzenartige Formelement positionsfest ist und das patritzenartige Formelement gegenlagert, wobei die Kunststoffplatte dazwischen aufgenommen ist. Natürlich weist das matritzenartige Formelement eine entsprechend komplementär ausgebildete Form auf, die also ebenfalls die Ausbildung der entsprechenden Trichterform erlaubt. Auf diese Weise kann mit den beiden Formelementen die lokale Ausbildung der Ablaufgeometrie erfolgen.

Das patritzenartige Formelement ist bevorzugt über ein Stellmittel aus einer Ruheposition, in der es von der Kunststoffplatte entfernt ist, in eine Umformposition, in der es die Kunststoffplatte unter Ausbildung der Ablaufgeometrie umformt, bewegbar. Wie beschrieben, wird das patritzenartige Formelement bevorzugt erst dann gegen die Kunststoffplatte bewegt, wenn der zweite Rahmen die Umformendposition erreicht hat. Erst dann wird das Formelement vertikal gegen die Kunststoffplatte bewegt, sodass diese in das bevorzugt vorgesehene matritzenartige Formelement eingeformt wird. Die Bewegung des patritzenartigen Formelement erfolgt über ein geeignetes Stellmittel wie einen Stellzylinder, der hydraulisch oder pneumatisch betätigt werden kann, wobei auch ein Elektromotor denkbar wäre. Durch diese Art der Umformung ist außerdem sichergestellt, dass von jeder Position des Wannenbodens ein Gefälle in Richtung des Ablaufs gegeben ist. Dies kann beim Thermoformen unter Umständen nicht gegeben sein, wenn die Form nicht entsprechend exakt in ihrer Formgeometrie ausgearbeitet wurde.

Gemäß einer besonders vorteilhaften Weiterbildung der Erfindung ist das patritzenartige Formelement oder sind, wenn beide vorgesehen sind, beide Formelemente in ihrer Position veränderbar am ersten und am zweiten Rahmen angeordnet. Diese Ausgestaltung ermöglicht es, den Ort, an dem die Ablaufgeometrie ausgebildet wird, zu variieren. Beispielsweise kann bei einer Badewanne die Ablaufgeometrie an einem Längsende mittig oder in der Bodenmitte vorgesehen werden. Bei einer Duschwanne kann, je nach Wannengeometrie, der Ablauf in eine Ecke oder, bei einer länglichen rechteckigen Duschwanne, auch an einem Längsende vorgesehen sein. Durch einfache Umpositionierung des oder der Formelemente kann die entsprechende Position des Ablaufs ohne weiteres eingestellt werden.

Zur einfachen Positionsveränderung ist es zweckmäßig, wenn das matritzenartige Formelement an einem verschiebbar am ersten Rahmengestell angeordneten Träger und das patritzenartige Formelement an einem verschiebbar am zweiten Rahmengestell angeordneten Träger angeordnet ist. Die Träger sind in einer Richtung verschiebbar, beispielsweise bei einer rechteckigen Rahmenanordnung in der Längsrichtung.

Um eine Veränderung der Ablaufposition nicht nur in einer Richtung, sondern in zwei orthogonal zueinander stehenden Richtungen zu ermöglichen, ist es zweckmäßig, wenn die beiden Formelemente verschiebbar an dem jeweiligen Träger angeordnet sind. Durch Verschieben der Formelemente längs des Trägers ist auch eine Bewegung in Querrichtung möglich, sodass über die beiden Bewegungsfreiheitsgrade folglich eine nahezu beliebige Positionierung des oder der Formelemente möglich ist.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: eine Prinzipdarstellung einer erfindungsgemäßen Umformeinrichtung einer ersten Ausführungsform, wobei der zweite Rahmen in die Umformendposition in den ersten Rahmen eingefahren ist,
- Fig. 2: eine Perspektivansicht des ersten Rahmens,
- Fig. 3: eine Perspektivansicht des zweiten Rahmens,
- Fig. 4: eine Seitenansicht der Umformeinrichtung aus Fig. 1,
- Fig. 5: eine vergrößerte Teilansicht der Umformeinrichtung aus Fig. 1 unter Darstellung der beiden die Ablaufgeometrie ausbildenden Formelemente,
- Fig. 6: eine Perspektivansicht der Umformeinrichtung aus Fig. 1 mit umgeformter Kunststoffplatte,
- Fig. 7: eine Längsschnittansicht der Anordnung aus Fig. 7,
- Fig. 8: eine Ansicht des Umformbereichs im Übergang von einer Seitenwand zum Boden,
- Fig. 9: eine Ansicht des Umformbereichs der Ablaufgeometrie,
- Fig. 10: eine Prinzipdarstellung einer erfindungsgemäßen Umformeinrichtung einer zweiten Ausführungsform zur Herstellung einer Duschwanne mit in den ersten Rahmen eingefahrenem zweitem Rahmen,
- Fig. 11: eine Schnittansicht durch die Anordnung aus Fig. 10,
- Fig. 12: eine Schnittansicht entsprechend Fig. 11 mit dargestellter, umgeformter Kunststoffplatte,
- Fig. 13: die Anordnung aus Fig. 12 mit zusammenwirkenden Formelementen,
- Fig. 14: eine Perspektivansicht einer erfindungsgemäßen Umformeinrichtung einer dritten Ausführungsform zur Herstellung einer länglichen Duschwanne, und
- Fig. 15: eine Perspektivansicht der Umformeinrichtung aus Fig. 14 zur Herstellung einer flacheren Duschwanne.

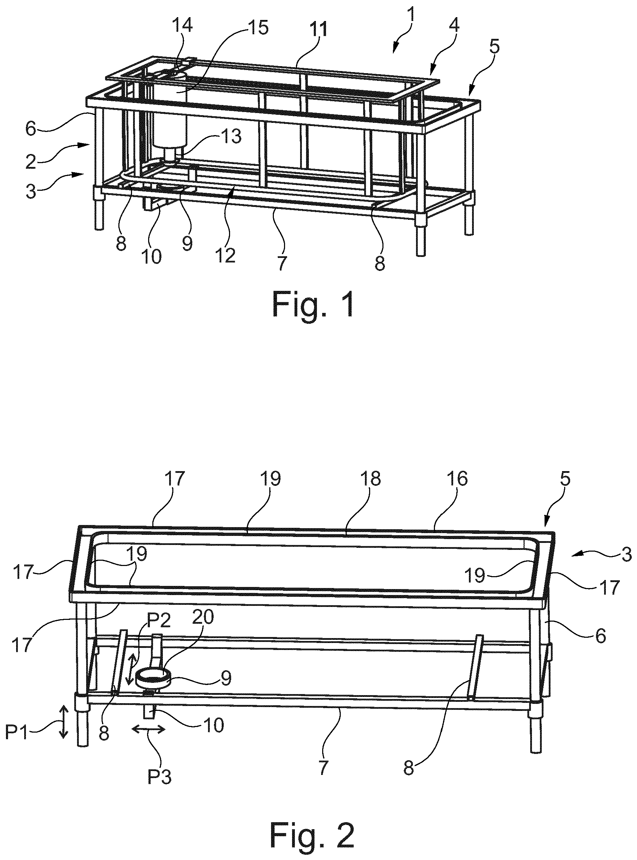

Fig. 1 zeigt eine erfindungsgemäße Umformeinrichtung 1 zur Herstellung eines wannenförmigen, eine Sichtseite und eine Unterseite aufweisenden Sanitärgegenstands aus Kunststoff. Die gezeigte Umformeinrichtung 1 ist zur Herstellung einer Badewanne ausgelegt. Die Umformeinrichtung 1 weist eine Rahmenanordnung 2 auf, welche Rahmenanordnung 2 einen ersten Rahmen 3 und einen zweiten Rahmen 4 aufweist. Der erste Rahmen 3 ist ein offener Rahmen, sodass der demgegenüber etwas kleinere zweite Rahmen 4 von oben vertikal in den ersten Rahmen 3 eingefahren werden kann, wie in Fig. 1 gezeigt. Am ersten Rahmen 3 ist eine erste rahmenartigen Biegestruktur 5 vorgesehen, die nachfolgend in Bezug auf Fig. 2 näher erläutert wird. Diese Biegestruktur 5 ist an einem Rahmengestell 6 angeordnet, an dem darüber hinaus ein Gestellabschnitt 7 höhenverstellbar angeordnet ist, an dem ein Anschlag umfassend zwei Anschlagelemente 8 vorgesehen ist, der als Anschlag zur Begrenzung der Einfahrendposition des zweiten Rahmens 4 dient. Weiterhin ist am Gestellabschnitt 7 ein matritzenartiges Formelement 9 an einem Träger 10 befestigt, welcher Träger 10 längs des Gestellabschnitt 7 verfahren und beliebig positioniert werden kann. Das matritzenartige Formelement 9 ist darüber hinaus längs des Trägers 10 verschiebbar.

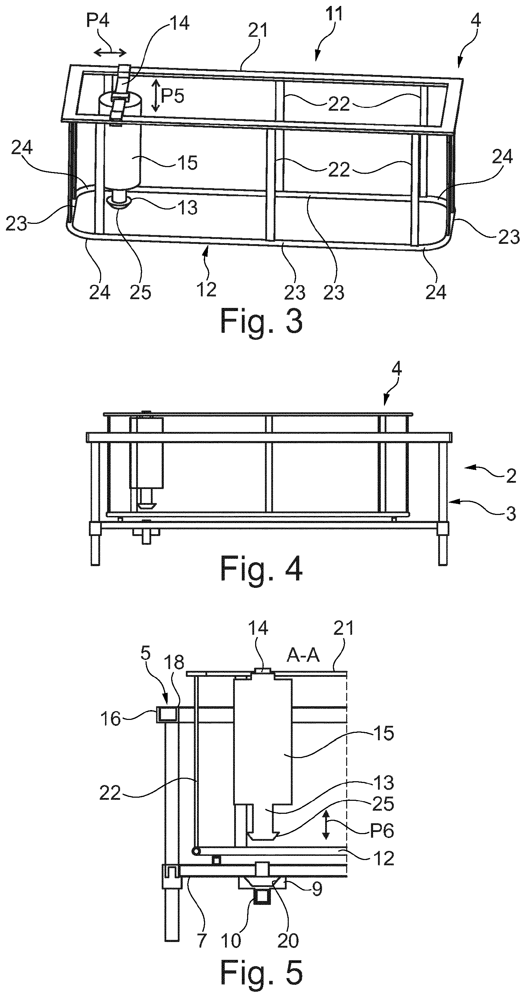

Auch der zweite Rahmen 4 weist ein Rahmengestell 11 auf, an dem eine zweite rahmenartigen Biegestruktur 12 vorgesehen ist, die nachfolgend ebenfalls zu Fig. 3 im Detail beschrieben wird. An dem Rahmengestell 11 ist ein patritzenartiges Formelement 13 über einen Träger 14 angeordnet, wobei auch hier der Träger 14 längs des Rahmengestell 11 verschiebbar ist. Das patritzenartige Formelement 11 ist über ein Stellelement 15 vertikal bewegbar, wobei das Stellelement 15 in geeigneter Weise längs des Trägers 14 verschiebbar angeordnet ist. Wie auch das matritzenartige Formelement 9 kann auch das patritzenartige Formelement 13 demzufolge längs und quer verschoben werden. Die beiden Formelemente 9,13 wirken zusammen, um eine Ablaufgeometrie auszubilden, was nachfolgend noch beschrieben wird.

Fig. 2 zeigt in einer Detailansicht den ersten Rahmen 3. Gezeigt ist das rechteckige Rahmengestell 6, an dem der Gestellabschnitt 7 in geeigneter Weise, wie über den Pfeil P1 dargestellt ist, höhenverstellbar angeordnet ist. Dargestellt auch die beiden Anschlagelemente 8, die im Bereich der Rahmenenden angeordnet sind.

Ebenfalls gezeigt ist die erste Biegestruktur 5. Diese erste Biegestruktur 5 dient der Ausbildung eines Randabschnitts des Sanitärgegenstands. Sie weist einen ersten äußeren rahmenartigen Strukturabschnitts 16 auf, der über vier schmale, leistenförmige Flachstreben 17 gebildet ist, die zu einer Rahmen- respektive Rechteckform verbunden sind. Im Inneren des erste Strukturabschnitts 16 ist ein zweiter rahmenartiger Strukturabschnitt 18 angeordnet, der ebenfalls aus vier leistenförmigen Streben 19 besteht, die ebenfalls zu einer Rechteckform verbunden sind, jedoch gerundete Ecken aufweisen. Über die beiden Strukturabschnitte 16,18 wird eine Randgeometrie hergestellt, umfassend einen äußeren, kurzen und vertikal nach unten abgekanteten Randabschnitt, gefolgt von einem im wesentlichen horizontalen Randabschnitt, der sodann in den Wannenbereich übergeht. Die beiden Strukturabschnitte 16,18 können in der gleichen Ebene mit ihren vorzugsweise abgerundeten Oberkanten liegen. Dies führt dazu, dass der hergestellte oberseitige Randabschnitt horizontal verläuft, da die umzuformende Kunststoffplatte auf beiden Oberseiten oder Oberkanten der Strukturabschnitte 16,18 im unverformten Zustand aufliegt. Alternativ kann der innere Strukturabschnitt 18 auch geringfügig tiefer als der äußere Strukturabschnitte 16 sein, was dazu führt, dass der ausgebildete Randabschnitt geringfügig schräg zum Wanneninneren verläuft, da die Kunststoffplatte beim Einfahren des zweiten Rahmens erst gegen den inneren zweiten Strukturabschnitten 18 läuft, wonach die Kunststoffplatte erst weiter zur Bildung der Wannenwände umgeformt wird.

Gezeigt ist des Weiteren das quasi topfartige matritzenartige Formelement 9, das eine kegelstumpfartige Formfläche 20 aufweist. Es ist wie ausgeführt verschiebbar an dem Träger 10 angeordnet, wie durch den Pfeil P2 gezeigt, wobei der Träger 10, wie durch den Pfeil P3 gezeigt, längs des Gestellabschnitts 7 verschoben werden kann.

Fig. 3 zeigt eine Prinzipdarstellung des zweiten Rahmens 4. Gezeigt ist dessen Rahmengestell 11, das ebenfalls rechteckiger Form ist. Es weist eine oberen Abschnitt 21 auf, von dem aus mehrere Streben 22 vertikal nach unten laufen. Am unteren Ende der Streben 22 ist die zweite Biegestruktur 12 angeordnet, die ebenfalls aus vier zu einer Rechteckform verbundenen Streben 23 gebildet ist, die über entsprechende Biegungen 24 in den Eckbereichen ineinander übergehen. Während wie beschrieben die Strukturabschnitte 16,18 der ersten Biegestruktur 5 über flache, leistenförmige Streben gebildet sind, sind die Streben 23 der zweite Biegestruktur 12 über im Querschnitt bevorzugt runde, gegebenenfalls auch ovale Streben, die auch rohrförmig sein können, gebildet.

Dargestellt ist des Weiteren das patritzenartige Formelement 13 sowie das Stellmittel 15 und der Träger 14, der am oberen Abschnitt 21 längsverschiebbar angeordnet ist (siehe Pfeil P4), wohingegen das Stellmittel 15 samt Formelement 13 längs des Trägers 14 wie beschrieben bewegbar ist (siehe Pfeil P5). Das Formelement 13 ist nach Art eines Kegelstumpfs ausgeführt und weist eine entsprechende konische Kegelfläche 25 auf, entsprechend der konischen Fläche 20 des Formelement 9. Sie passen also formkompatibel ineinander, sodass hierüber die Ablaufgeometrie ausgebildet werden kann.

Wie beschrieben, und wie auch Fig. 1 zeigt, ist der erste Rahmen 3 oberseitig offen, er wird seitlich lediglich über die erste Biegestruktur 5 begrenzt. Dies ermöglicht es, dass der zweite Rahmen 4 von oben mit der zweiten Biegestruktur vorauslaufend in den ersten Rahmen 3 eingefahren werden kann und in eine Umformendposition gebracht wird, die über die Anschlagelemente 8 begrenzt ist. Eine Seitenansicht der Umformeinrichtung 1 aus Fig. 1 ist in Fig. 4 gezeigt, wobei sich auch hier der zweite Rahmen 4 in der Umformendposition befindet.

Fig. 5 zeigt eine vergrößerte Teilansicht des Bereichs der beiden Formelemente 9 und 13. Das patritzenartige Formelement 13 kann über das Stellelement 15, wie durch den Pfeil P6 gezeigt, vertikal bewegt werden, sodass es in das matritzenartige Formelement 9 eingefahren werden kann.

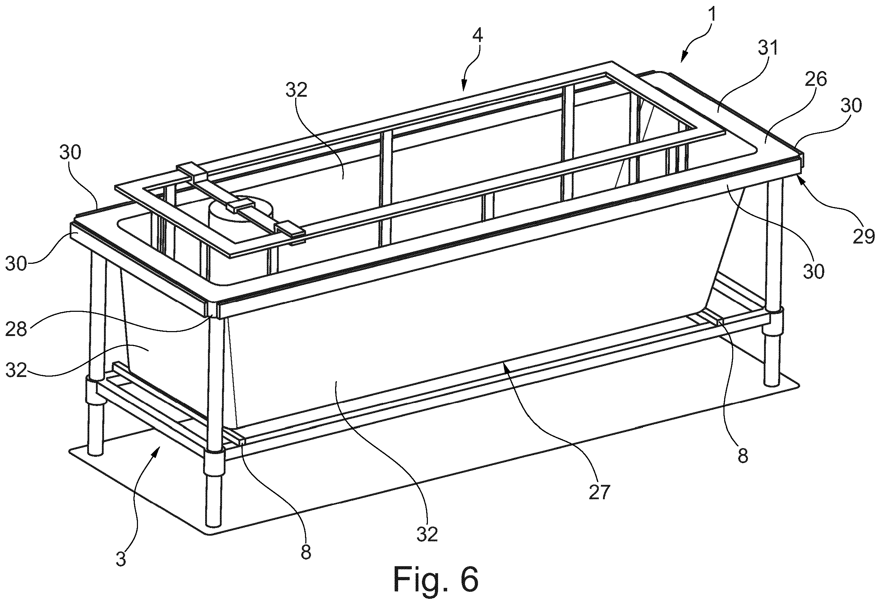

Fig. 6 zeigt die erfindungsgemäße Umformeinrichtung 1, mit der eine Kunststoffplatte 26 zur Bildung eines Sanitärgegenstands 27 in Form einer Badewanne umgeformt wurde. Zu Beginn des Vorgangs ist der zweite Rahmen 4 oberhalb des ersten Rahmens 3 positioniert, sodass die ebenflächige Kunststoffplatte 26 auf die Biegestruktur 5 des ersten Rahmens 3 aufgelegt werden kann. Es sei angenommen, dass die beiden Strukturabschnitte 16,18 in der gleichen Ebene liegen, was dazu führt, dass die Kunststoffplatte 1 auf beiden Oberkanten der rechteckigen Strukturabschnitte 16,18 aufliegt. In einem nächsten Schritt wird ein Randabschnitt 28 der Kunststoffplatte 26 vertikal nach unten abgewinkelt und mit einer Fixiereinrichtung 29 fixiert. Die Fixiereinrichtung 29 weist vier längliche Klemmleisten 30 auf, die beispielsweise hydraulisch pneumatisch betätigt werden können und die den abgewinkelten Randabschnitt 28 gegen die Außenseite des ersten Strukturabschnitts 16 klemmen. Hierüber wird die Kunststoffplatte 26, die wie gesagt noch unverformt, also ebenflächige ist, fixiert.

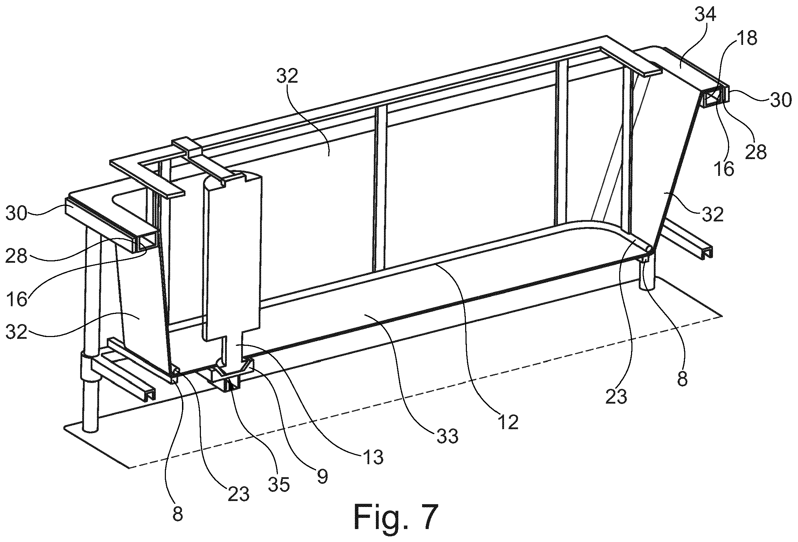

Sodann wird der zweite Rahmen 4 von oben gegen die Kunststoffplatte 26 gefahren, was dazu führt, dass die vorlaufende zweite Biegestruktur 12 gegen die Oberseite 31 der Kunststoffplatte 26 läuft. Bei weiterem Absenken wird die Kunststoffplatte 26 mitgenommen und unter Ausbildung der Wannenstruktur Stück für Stück gedehnt, sodass sich einerseits die entsprechenden Wannenwände 32 ausbilden, aber auch der Boden 33. Die Absenkbewegung erfolgt solange, bis die Umformendposition erreicht ist, in der die umgeformte Kunststoffplatte 26 gegen die Anschlagelemente 8 bewegt ist, wobei die Anschlagelemente 8, siehe Fig. 7, bevorzugt exakt unterhalb der querverlaufenden Streben 23 der zweiten Biegestruktur 12 verlaufen. Zwischen den Anschlagelemente 8 und den Streben 23 ist das Kunststoffmaterial aufgenommen. Statt solcher Anschlagelemente 8 kann auch anderswo ein Anschlag vorgesehen sein, gegen den der zweite Rahmen 4 z.B. mit seinem Rahmengestell läuft.

Die Schnittansicht gemäß Fig. 7 zeigt sehr anschaulich die entsprechende Form. Einerseits gezeigt sind die Klemmleisten 30, die den Randabschnitt 28 gegen den ersten Strukturabschnitt 16 klemmen. Ebenfalls gezeigt ist der horizontale Randabschnitt 34, der den oberen Wannenrand ausbildet. Dieser natürlich ebenfalls an allen vier Seiten umlaufende Randabschnitt 34 geht in die entsprechenden Seitenwände 32 über. Der Winkel, unter dem die Seitenwände 32 zum oberen Randabschnitt 34 und zum Boden 33 stehen, hängt von der Größe und Positionierung der zweiten Biegestruktur 12 ab. Denn, wie Fig. 7 zeigt, die zweite Biegestruktur 12 nimmt das Kunststoffmaterials mit nach unten mit, wobei über die zweite Biegestruktur 12, also die im Querschnitt runden Streben 23 die entsprechenden Biegungen im Übergang der Wannenwände 32 zum Boden 33 definiert und ausgebildet wird, mithin also auch der Biegeradius. Es ist ersichtlich, dass, je nachdem, wo die Streben 23 relativ zu dem zweiten Strukturabschnitt 18, um den das Kunststoffmaterials im Übergang von dem oberen Randabschnitt 34 zu den Wannenwände den 32 gebogen wird, positioniert sind, der Winkel der Wannenwände 32 zum oberen Randabschnitt 34 größer oder kleiner sein kann, ebenso der Winkel zum Boden 33. Je näher eine Strebe 23 zur einer der Streben 19 positioniert ist, umso steiler verläuft die Wannenwand 32, und umgekehrt.

Gezeigt ist in den Figuren 6 und 7 des Weiteren auch das matritzenartige erste Formelement 9 sowie das patritzenartige zweite Formelement 13, wobei, siehe die geschnittene Ansicht gemäß Fig. 7, das patritzenartige Formelement 13 in das matritzenartige Formelement 9 eingefahren ist. Ersichtlich bildet sich durch das umgeformte Kunststoffmaterial eine entsprechende trichter- oder kegelartige Ablaufgeometrie 35 aus, wie bereits in Fig. 7 gezeigt.

Nach Erreichen der Umformendposition und Einfahren des Formelements 13 in das Formelement 9 zur Ausbildung der Ablaufgeometrie 35 verbleibt die Anordnung eine Zeit in dieser Position, bis das erwärmte Kunststoffmaterial abgekühlt ist. Anschließend wird der zweite Rahmen 4 wieder angehoben und das Formelement 13 zurückgestellt, sodass der umgeformte Kunststoffgegenstand aus dem ersten Rahmen 3 nach Lösen der Fixiereinrichtung 29 entnommen werden kann.

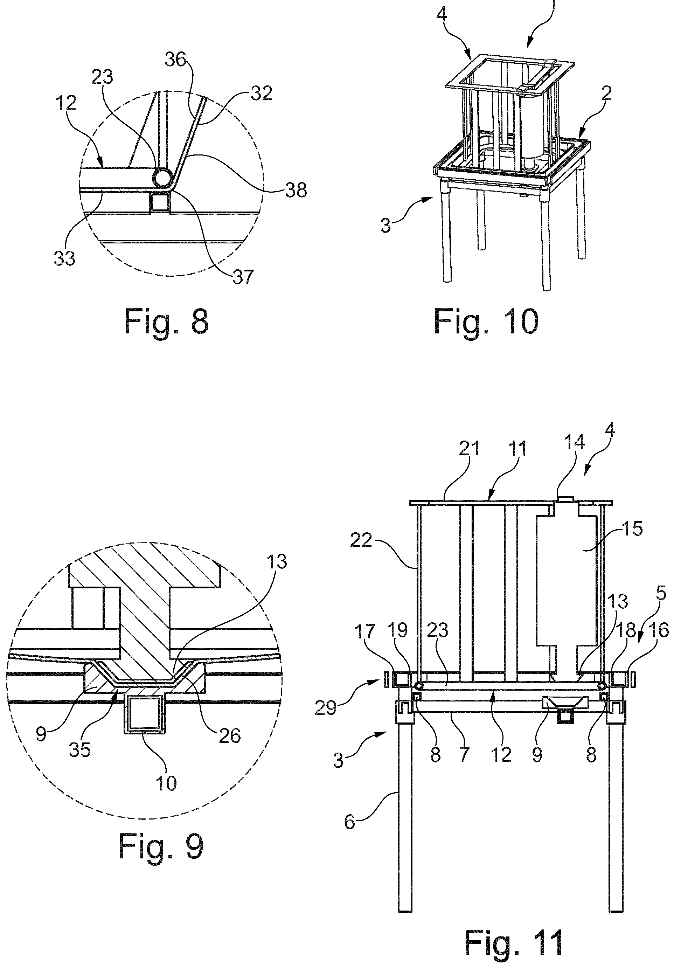

Fig. 8 zeigt in Form einer vergrößerten Teilansicht den Bereich des Übergangs einer Wannenwand 32 zum Boden 33. Der Bereich der Biegung wird wie beschrieben über die zweite Biegestruktur 12, also über die Streben 23 im Radius definiert, wobei hierüber wie beschrieben aber auch der Winkel, den eine Wannenwand 32 zum Boden 33 einnimmt, eingestellt wird. Die zweite Biegestruktur 12 greift an einer Sichtseite 36 der Kunststoffplatte 26 an, d. h., dass die ausgebildete Biegung 37 von der Innenseite her sichtbar ist. Anders ist dies bei der ersten Biegestruktur 5, die, wie Fig. 7 zeigt, an der gegenüberliegenden Unterseite 38 der Kunststoffplatte angreift, d. h., dass die dortigen linearen Anlagebereiche nicht sichtbar sind.

In jedem Fall ist zum Umformen zwischen der Kunststoffplatte 26 einerseits und den Biegestrukturen 5 und 12 andererseits nur ein näherungsweise linienförmiger Kontakt gegeben, der einzig und allein über die Auflagefläche oder den Umschlingungswinkel der jeweiligen Biegestruktur mit der Kunststoffplatte 26 definiert ist. Alle anderen Flächenbereiche der Kunststoffplatte 26 kommen während der Umformung in keinerlei Kontakt mit irgendeinem Teil der beiden Rahmen 3,4. Vielmehr werden sämtliche Flächenbereiche, also der umlaufende Randabschnitt 34 sowie die Wannenwände 32 und der Boden 33, quasi frei im Raum geformt respektive gedehnt.

Fig. 9 zeigt eine vergrößerte Teilansicht des Zusammenwirkens des matritzenartigen Formelements 9 und des patritzenartigen Formelements 13. Zwischen ihnen ist ersichtlich die Kunststoffplatte 26, hier natürlich bereits im ungeformten Zustand, aufgenommen, sodass sich die entsprechende trichterförmige Ablaufgeometrie 35 ausbildet. Diese ist nachfolgend lediglich noch durch Entfernen des Bodenabschnitt der Ablaufgeometrie 35 zu öffnen.

Fig. 10 zeigt eine Perspektivansicht einer weiteren erfindungsgemäßen Umformeinrichtung 1, wobei für gleiche Bauteile gleiche Bezugszeichen verwendet werden. Die Umformeinrichtung 1 weist eine Rahmenanordnung 2 mit einem ersten Rahmen 3 sowie einem in den offenen ersten Rahmen 3 von oben einfahrbaren zweiten Rahmen 4 auf. Wie die Schnittansicht gemäß Fig. 11 zeigt, weist der erste Rahmen 3 wiederum eine erste Biegestruktur 5 mit den beiden Strukturabschnitten 16,18 auf, die der Randausbildung dienen, wobei ebenfalls die Fixiereinrichtung 29 gezeigt ist. Dargestellt ist ebenso das matritzenartige Formelement 9, das am Gestellabschnitt 7 in der vorstehend bereits zur ersten Ausführungsform beschriebenen Weise befestigt ist, und dass ebenfalls längs- und quer verschiebbar ist. Der Gestellabschnitt 7 ist des Weiteren vertikal verschiebbar an dem vertikalen Rahmengestell 6 und folglich höhenverstellbar. Am Gestellabschnitt 7 sind des Weiteren die Anschlagelemente 8 angeordnet.

Der zweite Rahmen 4 weisen ebenfalls ein Rahmengestell 11 auf, mit dem oberen Abschnitt 21, an dem wiederum entsprechende vertikal verlaufende Streben 22 angeordnet sind, an deren unterem Ende die zweite Biegestruktur 12, ebenfalls rahmenartig, angeordnet ist. Wie die Schnittansicht gemäß Fig. 11 zeigt, ist diese wiederum über querschnittlich runde Streben 23 gebildet, während die Strukturabschnitte 16,18 über entsprechende leistenförmige, schmale Streben 17,19 gebildet sind.

Der zweite Rahmen 4 weist ebenfalls das zweite patritzenartige Formelement 13 auf, das über das Stellelement 15 vertikal bewegt und in Wirkverbindung mit dem Formelement 9 gebracht werden kann. Das Stellelement 15 ist wiederum an dem Träger 14 angeordnet und längs diesem verschiebbar, wie auch der Träger 14 längs des Abschnitts 21 verschiebbar ist.

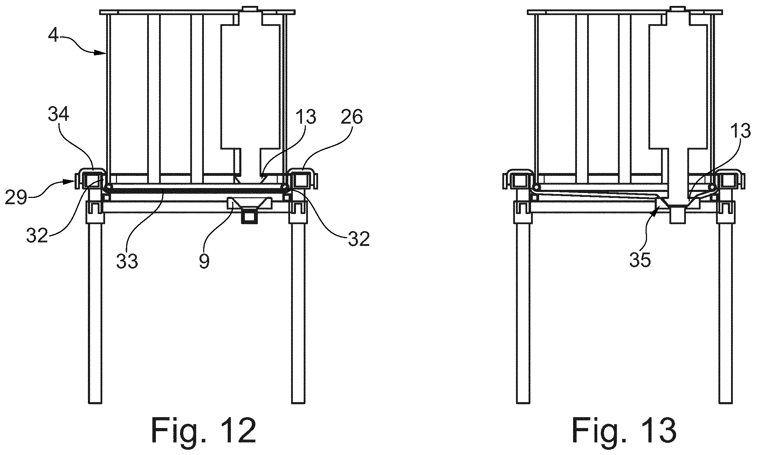

Ersichtlich ist hier die Einfahrtiefe deutlich geringer als bei der Ausgestaltung gemäß der vorstehenden Fig.en, die zur Herstellung einer tiefen Badewanne dienen. Denn eine Duschwanne ist deutlich niedriger als eine Badewanne. Die Figuren 12 und 13 zeigen Schnittansichten entsprechend der Fig. 11, wobei hier die Trägerplatte 26 in der umgeformten Position gezeigt ist. Dabei zeigt Fig. 12 die über die Klemmeinrichtung 29 fixierte Kunststoffplatte 26 nach dem Erreichen der Umformendposition seitens des zweite Rahmens 4. Ersichtlich ist wiederum die entsprechende, doppelt gebogene oder gewinkelte Randgeometrie unter Ausbildung des oberen Randabschnitts 34, wie auch die entsprechenden Wannenwände 32 und der Boden 33. Die beiden Formelemente 9 und 13 wirken noch nicht zusammen, d. h., dass die Ablaufgeometrie noch nicht ausgebildet ist. Dies zeigt jedoch Fig. 13, in der das patritzenartige Formelement 13 abgesenkt ist, sodass die Kunststoffplatte 26 unter Ausbildung der Ablaufgeometrie 35 entsprechend verformt ist.

Die Figuren 10-13 zeigen anschaulich, dass es ohne weiteres durch einfaches Verändern der Höhenposition der Anschlagelemente 8 durch vertikales Verschieben des Gestellabschnitts 7 längs des Rahmengestell 6 möglich ist, die Einfahrtiefe zu verändern und demzufolge auch die Tiefe der hergestellten Duschwanne. Denn die Kunststoffplatte 26 ist oberseitig respektive randseitig geklemmt, diese Position ist also fest. Durch Veränderung der Höhe der Anschlagelemente 8 jedoch wird die Tiefe der Einfahrbewegung entsprechend verändert, mithin also auch die Wannentiefe.

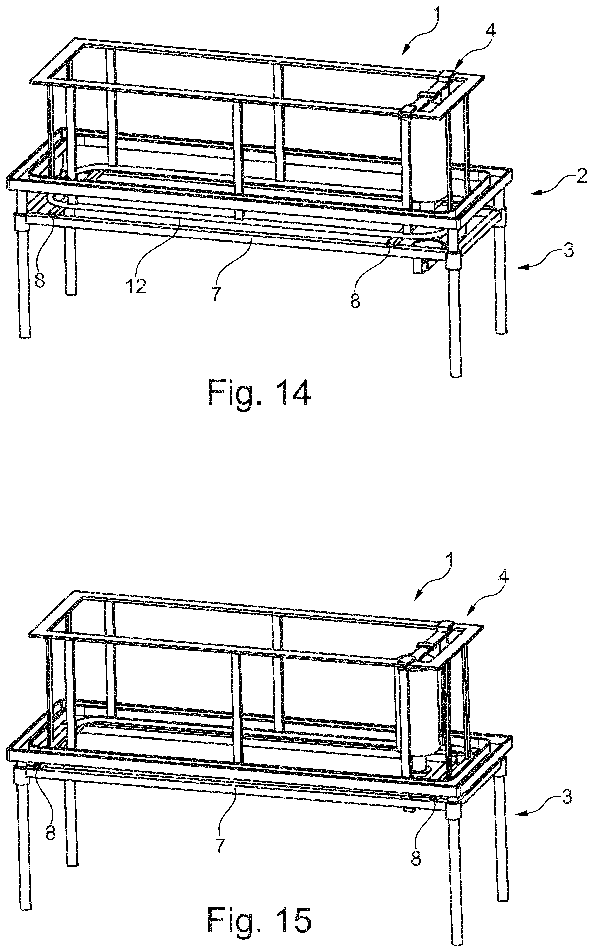

Fig. 14 zeigt eine Prinzipdarstellung einer weiteren Umformeinrichtung 1, mit der Rahmenanordnung 2, wie sie vergleichbar bereits aus Fig. 1 bekannt ist. Vorgesehen ist ein erster Rahmen 3 sowie ein in diesen einfahrbarer zweiter Rahmen 4. Der Aufbau ist identisch zur Ausgestaltung gemäß Fig. 1. Lediglich der zweite Rahmen 4 ist etwas länger, d. h., dass die zweite Biegestruktur 12 etwas länger ist als bei dem Ausführungsbeispiel gemäß Fig. 1. Dies führt dazu, dass der Winkel der vorderen und hinteren Wannenwand 32 etwas steiler ist. Ebenso ist der Gestellabschnitt 7 deutlich höher positioniert, d. h., dass die Anschlagelemente 8 deutlich höher sind und demzufolge nur eine reduzierte Einfahrtiefe gegeben ist. Die in Fig. 14 gezeigte Ausgestaltung dient der Herstellung einer länglichen, rechteckförmigen Duschwanne.

Fig. 15 zeigt die aus Fig. 14 bereits bekannte Umformeinrichtung 1, ebenfalls in der Umformendposition, wobei auch hier die Kunststoffplatte aus Übersichtlichkeitsgründen nicht gezeigt ist. Hier ist der Gestellabschnitt 7 mit den Anschlagelemente 8 noch höher positioniert, so dass die Einfahrtiefe des zweiten Rahmens 4 in den ersten Rahmen 3 geringer ist als bei der Ausgestaltung gemäß Fig. 14. Die herstellbare Duschwanne weist eine identische Grundgeometrie auf, ist jedoch flacher als die mit der Ausgestaltung gemäß 14 herstellbare Duschwanne.

Wie ein Vergleich der Figuren 1 und 14 zeigt, sind die dort vorgesehenen Rahmenanordnungen 2 nahezu identisch. Lediglich der zweite Rahmen 4 ist etwas länger. Es ist denkbar, dass eine Badewanne und eine Duschwanne mit denselben Maßen, abgesehen von der Tiefe, ausgelegt sein kann. Lediglich die Winkel, unter denen die Wannenwände zum Wannenboden verlaufen, kann variieren, was abhängig von der Länge des zweite Rahmens 4 ist. Es ist nun denkbar, dass der zweite Rahmen 4, was sein Rahmengestell angeht, in er Länge veränderbar ist, mithin also etwas kürzer oder länger eingerichtet werden kann. Beispielsweise ist das Rahmengestell, was die Längsrichtung angeht, teleskopierbar. Die zweite Biegestruktur 12 ist lösbar, kann also gegen eine andere, der gewählten Länge angepasste Biegestruktur auf einfache Weise ausgetauscht werden. Denn die Biegestruktur 12 darf keinerlei Unebenheiten, wie sie bei einer teleskopierbaren oder gesteckten Ausgestaltung gegeben wären, aufweisen, sondern muss vollkommen homogen in ihrer Außenform sein. Auf diese Weise ist eine einfache Änderung des zweiten Rahmens 4 möglich, sodass mit ein und demselben erste Rahmen 3 sowohl eine Badewanne als auch eine Duschwanne herstellbar wäre.

Die Biegestrukturen 5, 12 sind bevorzugt aus entsprechenden Metallstreben gebildet, die oberflächlich entsprechend bearbeitet sind, sodass die Oberflächen möglichst glatt und homogen sind, was insbesondere für die zweite Biegestruktur 12, die eine Biegung an der Sichtseite ausbildet, gilt.

Dadurch, dass lediglich zwischen den quasi linienförmigen Biegestrukturen 5 und 12 sowie dem Kunststoffmaterial ein Kontakt gegeben ist, nicht aber im Bereich der entsprechenden Flächen, ist eine homogene Umformung mit einer fehlerfreien Oberfläche respektive Sichtfläche des umgeformten Gegenstands möglich. Insbesondere zeigen die Wannenwände 32 sowie der Boden 33 über die Fläche eine homogene Dicke, da sie gleichmäßig beim Umformen gleichmäßig gedehnt werden, nachdem keinerlei Kontakt zu irgendeinem die Dehnung behindernden Formteil gegeben ist.

Nach der Entnahme des Umformgegenstands aus dem ersten Rahmen 3 kann ein Hinterspritzen der Unterseite, die nicht sichtbar ist, mit einem Verstärkungsmaterial, beispielsweise mit einem mit Fasern wie Glasfasern verstärktem Kunststoffmaterial, erfolgen, was der Versteifung dienen. Eine Bearbeitung der sich Sichtfläche ist aber in jedem Fall nicht erforderlich, da diese weder durch den Umformvorgang noch durch das Anbringen des Verstärkungsmaterials in negativer Weise beeinflusst wird.

## Patentansprüche

1. Verfahren zur Herstellung eines wannenförmigen, eine Sichtseite und eine Unterseite aufweisenden Sanitärgegenstands aus Kunststoff, mit folgenden Schritten:
- Bereitstellen einer zur Bildung des Sanitärgegenstands umzuformenden Kunststoffplatte (26),
- Bereitstellen einer Umformeinrichtung (1) umfassend eine Rahmenanordnung (2) mit einem ersten Rahmen (3) mit einer ersten rahmenförmigen Biegestruktur (5) und einem zweiten Rahmen (4) mit einer zweiten rahmenförmigen Biegestruktur (12), wobei die Kunststoffplatte (26) über die Biegestrukturen (5, 12) umzuformen ist,
- Anordnen und Befestigen der erwärmten Kunststoffplatte (26) am ersten Rahmen (3),
- Einfahren des zweiten Rahmens (4) in den offenen ersten Rahmen (3) in eine Umformendposition derart, dass der zweite Rahmen (4) beim Einfahren mit seiner Biegestruktur (12) die Kunststoffplatte (26) mitnimmt, wobei die Kunststoffplatte (26) sowohl über die erste als auch die zweite Biegestruktur (5, 12) wannenförmig umgeformt wird,
- Abkühlen der umgeformten Kunststoffplatte (26).

2. Verfahren nach Anspruch 1, **dadurch gekennzeichnet, dass** nach dem Abkühlen eine Verstärkungsschicht auf die Unterseite aufgebracht wird.

3. Verfahren nach Anspruch 1 oder 2, **dadurch gekennzeichnet, dass** eine Rahmenanordnung (2) mit einem ersten Rahmen (3) verwendet wird, dessen erste Biegestruktur (5) einen äußeren ersten Strukturabschnitt (16) und einen parallel dazu verlaufenden, innerhalb des ersten Strukturabschnitts (16) liegenden zweiten Strukturabschnitt (18) aufweist, wobei die erwärmte Kunststoffplatte (26) derart am ersten Rahmen (3) angeordnet wird, dass sie mit ihrem Seitenrand unter Ausbildung eines Randabschnitts (28) des Sanitärgegenstands um den weiter außen liegenden ersten Strukturabschnitt (16) gebogen ist.

4. Verfahren nach Anspruch 3, **dadurch gekennzeichnet, dass** die Kunststoffplatte (26) auf den beiden in einer gemeinsamen Ebene verlaufenden Strukturabschnitten (16, 18) aufliegend angeordnet wird, oder dass die Kunststoffplatte (26) nur auf dem weiter außen liegenden ersten Strukturabschnitt (16) aufliegend angeordnet wird und erst beim Einfahren des zweiten Rahmens (4) gegen den tiefer liegenden zweiten Strukturabschnitt (18) bewegt und über diesen umgeformt wird.

5. Verfahren nach einem der vorangehenden Ansprüche, **dadurch gekennzeichnet, dass** der zweite Rahmen (4) bis zum Erreichen eines Anschlags, gegen den der zweite Rahmen (4) läuft oder gegen den die Kunststoffplatte (26) beim Umformen bewegt wird, in den ersten Rahmen (3) eingefahren wird, wobei vorzugsweise eine Rahmenanordnung (2) verwendet wird, bei der der Anschlag höhenverstellbar ist.

6. Verfahren nach einem der vorangehenden Ansprüche, **dadurch gekennzeichnet, dass** beim Einfahren des zweiten Rahmens (4) oder nach Erreichen der Umformendposition ein am zweiten Rahmen (4) vorgesehenes patritzenartiges Formelement (13) die Kunststoffplatte (26) unter Ausbildung einer Ablaufgeometrie (35) lokal umformt, wobei vorzugsweise das patritzenartige Formelement (13) mit einem am ersten Rahmen (3) vorgesehenen matritzenartigen Formelement (9) in der Umformendposition in Wirkverbindung gebracht wird.

7. Verfahren nach Anspruch 6, **dadurch gekennzeichnet, dass** eine Rahmenanordnung (2) verwendet wird, bei der das patritzenartige Formelement (13) oder beide Formelemente (9, 13) in ihrer Position veränderbar am ersten und am zweiten Rahmen (3, 4) angeordnet sind.

8. Verfahren nach einem der vorangehenden Ansprüche, **dadurch gekennzeichnet, dass** eine Rahmenanordnung (2) verwendet wird, bei der der zweite Rahmen (4) relativ zum ersten Rahmen (3) zur Veränderung der Einfahrposition in wenigstens einer Richtung verstellbar ist.

9. Umformeinrichtung zur Herstellung eines wannenförmigen, eine Sichtseite und eine Unterseite aufweisenden Sanitärgegenstands aus Kunststoff, umfassend eine Rahmenanordnung (2) mit einem ersten Rahmen (3) mit einer ersten rahmenförmigen Biegestruktur (5) und einem zweiten Rahmen (4) mit einer zweiten rahmenförmigen Biegestruktur (12), wobei der zweite Rahmen (4) in den ersten Rahmen (3) unter Mitnahme einer am ersten Rahmen (3) fixierten Kunststoffplatte (3) einfahrbar und die Kunststoffplatte (26) über die Biegestrukturen (5, 12) beider Rahmen (3, 4) unter Ausbildung von Biegungen umformbar ist.

10. Umformeinrichtung nach Anspruch 9, **dadurch gekennzeichnet, dass** der erste Rahmen ein erstes Rahmengestell (6), an dem die erste Biegestruktur (5) angeordnet ist, und der zweite Rahmen (4) ein zweites Rahmengestell (11), an dem die zweite Biegestruktur (12) angeordnet ist, aufweisen.

11. Umformeinrichtung nach Anspruch 9 oder 10, **dadurch gekennzeichnet, dass** die erste Biegestruktur (5) mittels rahmenartig verbundener, im Querschnitt rechteckiger Flachstreben (17, 19) und die zweite Biegestruktur (12) mittels rahmenartig verbundener runder oder ovaler Streben (23) gebildet ist.

12. Umformeinrichtung nach einem der Ansprüche 9 bis 11, **dadurch gekennzeichnet, dass** die erste Biegestruktur (5) einen äußeren ersten rahmenartigen Strukturabschnitt (16) und einen parallel dazu verlaufenden, innerhalb des ersten Strukturabschnitts (16) liegenden zweiten rahmenartigen Strukturabschnitt (18) aufweist.

13. Umformeinrichtung nach Anspruch 12, **dadurch gekennzeichnet, dass** die beiden Strukturabschnitte (16, 18) in einer gemeinsamen Ebene verlaufen, oder dass der weiter außen liegende erste Strukturabschnitt (16) höher ist als der innen liegende zweite Strukturabschnitt (18).

14. Umformeinrichtung nach einem der Ansprüche 9 bis 13, **dadurch gekennzeichnet, dass** eine Fixiereinrichtung (29) zum Befestigen der Kunststoffplatte (26) am ersten Rahmen (3) vorgesehen ist.

15. Umformeinrichtung nach Anspruch 14, **dadurch gekennzeichnet, dass** die Fixiereinrichtung (29) zum Klemmen eines um die erste Biegestruktur (5), insbesondere den außen liegenden ersten Strukturabschnitt (16) gebogenen Randabschnitts (28) der Kunststoffplatte (26) ausgebildet ist, wobei vorzugsweise die Fixiereinrichtung (29) seitlich an die erste Biegestruktur (5) oder den ersten Strukturabschnitt (16) anlegbare, den Randabschnitt (28) dagegen klemmende Klemmleisten (30) umfasst.

16. Umformeinrichtung nach einem der Ansprüche 9 bis 15, **dadurch gekennzeichnet, dass** am ersten Rahmen (3) ein, vorzugsweise höhenverstellbarer, Anschlag vorgesehen ist, gegen den der zweite Rahmen (4) oder gegen den die Kunststoffplatte (26) beim Umformen bewegbar ist.

17. Umformeinrichtung nach Anspruch 16, **dadurch gekennzeichnet, dass** das erste Rahmengestell (6) einen an Vertikalträgern höhenverstellbar angeordneten Gestellabschnitt (7) aufweist, an dem der Anschlag angeordnet ist, wobei vorzugsweise der Gestellabschnitt (7) rahmenartig ist und an ihm zwei versetzt zueinander positionierte Anschlagelemente (8) vorgesehen sind.

18. Umformeinrichtung nach einem der Ansprüche 9 bis 17, **dadurch gekennzeichnet, dass** am zweiten Rahmen (4) ein patritzenartiges Formelement (13) zum Umformen der Kunststoffplatte (26) unter Ausbildung einer Ablaufgeometrie (35) vorgesehen ist, wobei vorzugsweise am ersten Rahmen (3) ein matritzenartiges Formelement (9) vorgesehen ist, das in der Umformendposition in Wirkverbindung mit dem patritzenartigen Formelement (13) bringbar ist.

19. Umformeinrichtung nach Anspruch 18, **dadurch gekennzeichnet, dass** das patritzenartige Formelement (13) über ein Stellmittel (15) aus einer Ruheposition, in der es von der Kunststoffplatte (26) entfernt ist, in eine Umformposition, in der es die Kunststoffplatte (26) unter Ausbildung der Ablaufgeometrie (35) umformt, bewegbar ist.

20. Umformeinrichtung nach einem der Ansprüche 18 oder 19, **dadurch gekennzeichnet, dass** das patritzenartige Formelement (13) oder beide Formelemente (9, 13) in ihrer Position veränderbar am ersten und am zweiten Rahmen (3, 4) angeordnet sind.

21. Umformeinrichtung nach Anspruch 20, **dadurch gekennzeichnet, dass** das matritzenartige Formelement (9) an einem verschiebbar am ersten Rahmengestell (6) angeordneten Träger (10) und das patritzenartige Formelement (13) an einem verschiebbar an dem zweiten Rahmengestell (11) angeordneten Träger (14) angeordnet ist, wobei vorzugsweise beide Formelemente (9, 13) verschiebbar an dem Träger (10, 14) angeordnet sind.

## Claims

1. Method for producing a tub-shaped sanitary object made of plastic with a visible side and a bottom, comprising the following steps:
- providing a plastic sheet (26) to be moulded to form the sanitary object,
- providing a forming device (1) comprising a frame arrangement (2) having a first frame (3) with a first frame-shaped bending structure (5) and a second frame (4) with a second frame-shaped bending structure (12), wherein the plastic sheet (26) is to be formed by means of the bending structures (5, 12),
- arranging and attaching the heated plastic sheet (26) to the first frame (3),
- inserting the second frame (4) into the open first frame (3) into a forming end position in such a way that the second frame (4) takes along the plastic sheet (26) with its bending structure (12) when it is inserted, wherein the plastic sheet (26) is formed into a tub shape by means of both the first and the second bending structure (5, 12),
- cooling the formed plastic sheet (26).

2. Method according to Claim 1, **characterized in that** a reinforcing layer is applied to the bottom after cooling.

3. Method according to Claim 1 or 2, **characterized in that** a frame arrangement (2) having a first frame (3) is used, the first bending structure (5) of which comprises an outer first structural section (16) and a second structural section (18) which extends parallel thereto and is lying inside the first structural section (16), wherein the heated plastic sheet (26) is arranged on the first frame (3) in such a way that it is bent with its side edge around the first structural section (16) which is lying further outside, forming an edge section (28) of the sanitary object.

4. Method according to Claim 3, **characterized in that** the plastic sheet (26) is arranged resting on the two structural sections (16, 18) which extend in a common plane, or **in that** the plastic sheet (26) is arranged resting only on the first structural section (16) which is lying further outside and is only moved against the second structural section (18) which is lying lower and is formed over this when the second frame (4) is inserted.

5. Method according to one of the preceding claims, **characterized in that** the second frame (4) is inserted into the first frame (3) until a stop is reached against which the second frame (4) runs or against which the plastic sheet (26) is moved during forming, wherein a frame arrangement (2) is preferably used in which the stop is height-adjustable.

6. Method according to one of the preceding claims, **characterized in that**, when the second frame (4) is inserted or after reaching the forming end position, a patrix-shaped forming element (13) which is provided on the second frame (4) locally forms the plastic sheet (26), while forming a drain geometry (35), wherein the patrix-shaped forming element (13) is preferably brought into operative connection with a matrix-shaped forming element (9) which is provided on the first frame (3) in the forming end position.

7. Method according to Claim 6, **characterized in that** a frame arrangement (2) is used in which the patrix-shaped forming element (13) or both forming elements (9, 13) are arranged on the first and on the second frame (3, 4) in their position which can be changed.

8. Method according to one of the preceding claims, **characterized in that** a frame arrangement (2) is used in which the second frame (4) can be adjusted relative to the first frame (3) in at least one direction in order to change the inserted position.

9. Forming device for producing a tub-shaped sanitary object made of plastic with a visible side and a bottom, comprising a frame arrangement (2) having a first frame (3) with a first frame-shaped bending structure (5) and a second frame (4) with a second frame-shaped bending structure (12), wherein the second frame (4) can be inserted into the first frame (3) while taking with it a plastic sheet (3) which is fixed to the first frame (3) and the plastic sheet (26) can be formed by means of the bending structures (5, 12) of both frames (3, 4) while forming bends.

10. Forming device according to Claim 9, **characterized in that** the first frame comprises a first framework structure (6), on which the first bending structure (5) is arranged, and the second frame (4) comprises a second framework structure (11), on which the second bending structure (12) is arranged.

11. Forming device according to Claim 9 or 10, **characterized in that** the first bending structure (5) is formed by means of flat struts (17, 19) which have a rectangular cross-section and are connected in a frame-shaped manner and the second bending structure (12) is formed by means of round or oval struts (23) which are connected in a frame-shaped manner.

12. Forming device according to one of Claims 9 to 11, **characterized in that** the first bending structure (5) comprises an outer first frame-shaped structural section (16) and a second frame-shaped structural section (18) which extends parallel thereto and is lying inside the first structural section (16).

13. Forming device according to Claim 12, **characterized in that** the two structural sections (16, 18) extend in a common plane, or **in that** the first structural section (16) which is lying further outside is higher than the second structural section (18) which is lying inside.

14. Forming device according to one of Claims 9 to 13, **characterized in that** a fixing device (29) is provided for attaching the plastic sheet (26) to the first frame (3).

15. Forming device according to Claim 14, **characterized in that** the fixing device (29) is designed to clamp an edge section (28) of the plastic sheet (26) which is bent around the first bending structure (5), in particular the outer first structural section (16), wherein the fixing device (29) preferably comprises clamping strips (30) which can be placed laterally against the first bending structure (5) or the first structural section (16) and clamp the edge section (28) thereto.

16. Forming device according to one of Claims 9 to 15, **characterized in that** a stop, which is preferably height-adjustable, is provided on the first frame (3), against which the second frame (4) or against which the plastic sheet (26) can be moved during forming.

17. Forming device according to Claim 16, **characterized in that** the first framework structure (6) comprises a framework section (7) which is arranged in a height-adjustable manner on vertical carriers and on which the stop is arranged, wherein the framework section (7) is preferably frame-shaped and is provided with two stop elements (8) which are positioned offset with respect to one another.

18. Forming device according to one of Claims 9 to 17, **characterized in that** a patrix-shaped forming element (13) is provided on the second frame (4) for forming the plastic sheet (26) while forming a drain geometry (35), wherein a matrix-shaped forming element (9) is preferably provided on the first frame (3), which can be brought into operative connection with the patrix-shaped forming element (13) in the forming end position.

19. Forming device according to Claim 18, **characterized in that** the patrix-shaped forming element (13) is movable by means of an adjusting means (15) from a rest position, in which it is at a distance from the plastic sheet (26), into a forming position, in which it forms the plastic sheet (26) while forming the drain geometry (35).

20. Forming device according to either of Claims 18 and 19, **characterized in that** the patrix-shaped forming element (13) or both forming elements (9, 13) are arranged on the first and on the second frame (3, 4) in their position which can be changed.

21. Forming device according to Claim 20, **characterized in that** the matrix-shaped forming element (9) is arranged on a carrier (10) that is displaceably arranged on the first framework structure (6) and the patrix-shaped forming element (13) is arranged on a carrier (14) that is displaceably arranged on the second framework structure (11), wherein both forming elements (9, 13) are preferably displaceably arranged on the carrier (10, 14).

## Revendications

1. Procédé de fabrication d'un article sanitaire en matière plastique en forme de cuve, présentant une face visible et une face inférieure, comprenant les étapes suivantes :
- se mettre à disposition une plaque (26) en matière plastique à déformer pour déformer l'article sanitaire,
- se mettre à disposition un dispositif de formage (1) comprenant un agencement de cadres (2) avec un premier cadre (3) présentant une première structure à fléchissement en forme de cadre (5) et un deuxième cadre (4) présentant une deuxième structure à fléchissement en forme de cadre (12), la plaque (26) en matière plastique étant destinée à être formée par les structures à fléchissement (5, 12),
- disposer et fixer la plaque en matière plastique chauffée (26) sur le premier cadre (3),
- déplacer le deuxième cadre (4) dans le premier cadre ouvert (3) jusqu'à une position de formage finale, de telle sorte que le deuxième cadre (4), lors de son déplacement, entraîne la plaque (26) en matière plastique au moyen de sa structure à fléchissement (12), la plaque (26) en matière plastique étant déformée en forme de cuve à la fois par la première et la deuxième structure à fléchissement (5, 12),
- opérer le refroidissement de la plaque en matière plastique déformée (26).

2. Procédé selon la revendication 1, **caractérisé en ce qu'**après le refroidissement, une couche de renfort est appliquée sur la face inférieure.

3. Procédé selon la revendication 1 ou la revendication 2, **caractérisé en ce qu'**il est utilisé un agencement de cadres (2) comprenant un premier cadre (3), dont la première structure à fléchissement (5) présente une première partie structurelle extérieure (16) et une deuxième partie structurelle (18) s'étendant parallèlement à celle-ci, située à l'intérieur de la première partie structurelle (16), la plaque en matière plastique chauffée (26) étant agencée sur le premier cadre (3) de telle sorte qu'elle soit courbée avec son bord latéral autour de la première partie structurelle (16) située plus à l'extérieur en formant une partie de bordure (28) de l'objet sanitaire.

4. Procédé selon la revendication 3, **caractérisé en ce que** la plaque (26) en matière plastique est agencée de manière à reposer sur les deux parties de structure (16, 18) s'étendant dans un plan commun, ou **en ce que** la plaque (26) en matière plastique est disposée en appui uniquement sur la première partie structurelle (16) située plus à l'extérieur et n'est déplacée et formée sur la deuxième partie structurelle (18) située plus bas qu'au moment du déplacement du deuxième cadre (4).

5. Procédé selon l'une des revendications précédentes, **caractérisé en ce que** le deuxième cadre (4) est déplacé dans le premier cadre (3) jusqu'à atteindre une butée contre laquelle le deuxième cadre (4) vient buter ou contre laquelle la plaque (26) en matière plastique est déplacée pendant le formage, un agencement de cadres (2) dans lequel la butée est réglable en hauteur étant de préférence utilisé.

6. Procédé selon l'une des revendications précédentes, **caractérisé en ce que**, lorsque le deuxième cadre (4) est déplacé ou après que la position de formage finale ait été atteinte, un élément de formage (13) de type mâle, prévu sur le deuxième cadre (4), forme localement la plaque (26) en matière plastique en formant une géométrie d'écoulement (35), l'élément de formage (13) de type mâle étant de préférence, dans la position de formage, mis en relation fonctionnelle avec un élément de formage (9) de type femelle, prévu sur le premier cadre (3).

7. Procédé selon la revendication 6, **caractérisé en ce qu'**il est utilisé un agencement de cadres (2) dans lequel l'élément de formage (13) de type mâle ou les deux éléments de formage (9, 13) sont agencés sur le premier et le deuxième cadre (3, 4) de manière que leur position puisse être modifiée.

8. Procédé selon l'une des revendications précédentes, **caractérisé en ce qu'**il est utilisé un agencement de cadres (2) dans lequel le deuxième cadre (4) est réglable par rapport au premier cadre (3) dans au moins une direction afin de modifier la position d'entrée.

9. Dispositif de formage pour la fabrication d'un article sanitaire en matière plastique en forme de cuve, présentant une face visible et une face inférieure, comprenant un agencement de cadres (2) avec un premier cadre (3) avec une première structure à fléchissement (5) en forme de cadre et un deuxième cadre (4) avec une deuxième structure à fléchissement (12) en forme de cadre, le deuxième cadre (4) étant apte à être déplacé dans le premier cadre (3) de façon à entraîner une plaque (26) en matière plastique fixée au premier cadre (3), et la plaque (26) en matière plastique étant apte à être formée par les structures à fléchissement (5, 12) des deux cadres (3, 4) en formant des courbures.

10. Dispositif de formage selon la revendication 9, **caractérisé en ce que** le premier cadre comprend un premier châssis (6) sur lequel est agencée la première structure à fléchissement (5), et le deuxième cadre (4) comprend un deuxième châssis (11) sur lequel est agencée la deuxième structure à fléchissement (12).

11. Dispositif de formage selon la revendication 9 ou la revendication 10, **caractérisé en ce que** la première structure à fléchissement (5) est formée au moyen de traverses plates (17, 19) reliées entre elles à la manière d'un cadre et de section rectangulaire, et la deuxième structure à fléchissement (12) est formée au moyen de traverses rondes ou ovales (23) reliées entre elles à la manière d'un cadre.

12. Dispositif de formage selon l'une des revendications 9 à 11, **caractérisé en ce que** la première structure à fléchissement (5) présente une première partie structurelle en forme de cadre (16) et une deuxième partie structurelle en forme de cadre (18) s'étendant parallèlement à celle-ci et située à l'intérieur de la première partie structurelle (16).

13. Dispositif de formage selon la revendication 12, **caractérisé en ce que** les deux parties de structure (16, 18) s'étendent dans un plan commun ou **en ce que** la première partie structurelle (16) située plus à l'extérieur est plus haute que la deuxième partie structurelle (18) située à l'intérieur.

14. Dispositif de formage selon l'une des revendications 9 à 13, **caractérisé en ce qu'**un dispositif de fixation (29) est prévu pour fixer la plaque (26) en matière plastique au premier cadre (3).

15. Dispositif de formage selon la revendication 14, **caractérisé en ce que** le dispositif de fixation (29) est conçu pour serrer une partie de bordure (28) de la plaque (26) en matière plastique pliée autour de la première structure à fléchissement (5), en particulier autour de la première partie structurelle (16) située à l'extérieur, le dispositif de fixation (29) comprenant de préférence des barres de serrage (30) aptes à être appliquées latéralement contre la première structure à fléchissement (5) ou la première partie structurelle (16) et serrant la partie de bordure (28).

16. Dispositif de formage selon l'une des revendications 9 à 15, **caractérisé en ce qu'**une butée, de préférence réglable en hauteur, est prévue sur le premier cadre (3), contre laquelle le deuxième cadre (4) ou la plaque (26) en matière plastique est apte à être déplacée pendant le formage.

17. Dispositif de formage selon la revendication 16, **caractérisé en ce que** le premier châssis (6) comporte une partie de châssis (7) agencée de manière réglable en hauteur sur des supports verticaux sur laquelle est agencée la butée, la partie de châssis (7) étant de préférence en forme de cadre et deux éléments de butée (8) décalés l'un par rapport à l'autre étant prévus sur celle-ci.

18. Dispositif de formage selon l'une des revendications 9 à 17, **caractérisé en ce qu'**un élément de formage (13) de type mâle est prévu sur le deuxième cadre (4) pour déformer la plaque (26) en matière plastique en formant une géométrie d'écoulement (35), un élément de formage (9) de type femelle étant de préférence prévu sur le premier cadre (3), lequel, en position de formage, est apte à être amené en liaison fonctionnelle avec l'élément de formage (13) de type mâle.

19. Dispositif de formage selon la revendication 18, **caractérisé en ce que** l'élément de formage (13) de type mâle est apte à être déplacé, à l'aide d'un moyen de réglage (15), d'une position de repos dans laquelle il est éloigné de la plaque (26) en matière plastique à une position de formage dans laquelle il déforme la plaque (26) en matière plastique en formant la géométrie d'écoulement (35).

20. Dispositif de formage selon l'une des revendications 18 ou 19, **caractérisé en ce que** l'élément de formage (13) de type mâle ou les deux éléments de formage (9, 13) sont agencés sur le premier et le deuxième cadre (3, 4) de manière que leur position puisse être modifiée.

21. Dispositif de formage selon la revendication 20, **caractérisé en ce que** l'élément de formage (9) de type femelle est agencé sur un support (10) mobile sur le premier châssis (6) et l'élément de formage (13) de type mâle est agencé sur un support (14) mobile sur le deuxième châssis (11), les deux éléments de formage (9, 13) étant de préférence agencés de manière déplaçable sur les supports (10, 14).
